# DEMANDE DE BREVET EUROPEEN

(11) **EP 4 293 762 A1**
(43) Date de publication de la demande: **20.12.2023**
(21) Numéro de dépôt: 23179395.1
(22) Date de dépôt: 15.06.2023
(51) Int. Cl.: H01M 8/00, H01M 4/88, H01M 8/0234, H01M 8/1004, H01M 8/0239, H01M 8/0243, H01M 8/10

(54) **FORMATION D'UNE COUCHE MICROPOREUSE MPL EN SURFACE D'UNE COUCHE ACTIVE POUR UN CONVERTISSEUR ELECTROCHIMIQUE**

(30) Priorité: 17.06.2022 FR 2205951
(71) Demandeur: Commissariat à l'énergie atomique et aux énergies alternatives, 75015 Paris (FR)
(72) Inventeur: MARTY, Clémence, 38054 GRENOBLE CEDEX 09 (FR); BLACHOT, Jean-François, 38054 GRENOBLE CEDEX 09 (FR); FOUDA-ONANA, Frédéric, 38054 GRENOBLE CEDEX 09 (FR); HEITZMANN, Marie, 38054 GRENOBLE CEDEX 09 (FR); PAUCHET, Joël, 38054 GENOBLE CEDEX 09 (FR); TOUDRET, Pierre, 38054 GRENOBLE CEDEX 09 (FR)
(74) Mandataire: Cabinet Nony

(57) **Abrégé**

L'invention concerne un procédé de formation d'une couche microporeuse (MPL) électroconductrice et hydrophobe, en surface d'une couche active destinée à un convertisseur électrochimique, comprenant au moins les étapes suivantes :
(a) disposer d'une dispersion non aqueuse, appelée « encre », comprenant au moins un matériau particulaire carboné et au moins un solvant organique ;
(b) former un dépôt de ladite encre en surface de ladite couche active ; et
(c) procéder à l'évaporation du ou desdits solvants pour former ladite couche microporeuse MPL, l'étape (c) étant opérée simultanément et/ou ultérieurement à l'étape (b);
dans lequel ladite encre comprend au moins un copolymère poly(fluorure de vinylidène-co-hexafluoropropène), noté PVDF-HFP, en solution dans ledit solvant organique.

Elle concerne également l'encre pour la préparation d'une telle couche microporeuse ; une structure multicouche comprenant au moins une couche active supportée par une membrane d'électrolyte solide et étant en contact, au niveau de sa face opposée à ladite membrane solide, avec une couche microporeuse obtenue par le procédé de l'invention, un assemblage membrane/électrodes (AME), comprenant une telle structure multicouche, ainsi que leur utilisation dans une cellule d'un convertisseur électrochimique, en particulier dans une PEMFC.

## Description

### Domaine technique

La présente invention concerne la préparation d'une couche microporeuse (MPL), électroconductrice et hydrophobe, utile dans le domaine de la fabrication des convertisseurs électrochimiques, en particulier des piles à combustible, notamment des piles à combustible à membrane échangeuse de protons, et électrolyseurs à membrane polymère.

Plus particulièrement, l'invention se rapporte à une nouvelle méthode permettant de former une couche microporeuse directement en surface d'une couche active dans le cadre de la préparation d'un assemblage membrane-électrodes destiné à un convertisseur électrochimique.

### Technique antérieure

Les piles à combustible à membrane échangeuse de protons (notée PEMFC selon l'acronyme anglais « Proton Exchange Membrane Fuel Cell ») sont des dispositifs de conversion électrochimique de l'énergie, considérés comme une source d'énergie prometteuse pour les applications transport. Bien que cette technologie ait été à l'avant-garde des efforts de commercialisation au cours des deux dernières décennies, surtout par les constructeurs automobiles, des percées sont encore nécessaires pour satisfaire toutes les spécifications de coût et de durabilité.

Le principe de fonctionnement d'une pile PEMFC repose sur la conversion de l'énergie chimique en énergie électrique par réaction catalytique de l'hydrogène et de l'oxygène. Une pile comprend au moins une cellule, mais plus généralement un empilement en série de plusieurs cellules, pour répondre aux besoins des applications. Chaque cellule comprend un assemblage membrane-électrodes (plus connu sous l'acronyme « AME »), appelé communément coeur de pile qui constitue l'élément de base des PEMFC.

Dans le coeur de pile se déroule l'ensemble des phénomènes donnant lieu à la conversion d'énergie. Comme dans tout système électrochimique, il est constitué de deux électrodes, une anode et une cathode, séparées par un électrolyte. Dans le cas de la PEMFC, ce dernier est une membrane polymère d'une épaisseur comprise entre 10 et 20 µm. Les électrodes sont formées de deux parties principales : une couche active (ou CL pour « catalyst layer » en langue anglaise), lieu des réactions électrochimiques catalysées par le platine (5 à 15 µm d'épaisseur), et une couche de diffusion (GDL pour « Gas Diffusion Layer » en langue anglaise), d'une épaisseur comprise entre 150 et 300 µm.

Cette couche de diffusion a un impact significatif à la fois sur les performances et sur la durabilité de la PEMFC, en raison de son rôle sur l'ensemble des phénomènes de transport intervenant au sein du coeur de la pile. Ainsi, la couche de diffusion sert à la collecte du courant, à l'alimentation en gaz réactif, mais aussi à l'élimination de l'eau et de la chaleur produites au sein du coeur de pile.

Pour répondre à l'ensemble de ces exigences, et permettre en particulier une bonne élimination de l'eau, il a été proposé d'inclure une couche microporeuse à base de carbone, dite « MPL » (pour « Microporous layer » en terminologie anglo-saxonne), entre la couche catalytique et la couche de diffusion des gaz.

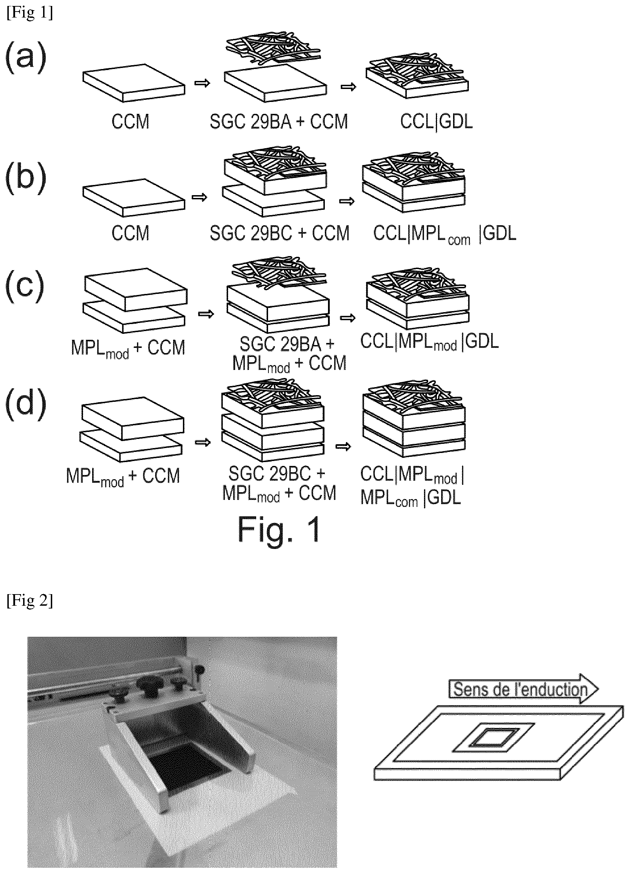

Plusieurs alternatives pour la formation d'une MPL au niveau d'un assemblage membrane-électrodes sont mises en oeuvre à ce jour. La technique la plus courante, représentée en Figure 1(b) (extrait de la publication [2]) consiste à déposer la couche pour former la MPL au niveau d'une GDL, puis l'ensemble MPL+GDL subit un traitement thermique hydrophobe à très haute température, avant d'être assemblé au niveau d'une structure CCM (« Catalyst Coated Membrane » en terminologie anglo-saxonne, désignant l'assemblage d'une membrane d'électrolyte revêtue sur chacune de ses faces opposées d'une couche catalytique), avec ou sans pressage à chaud.

Une autre technique, utilisée en recherche, consiste à préparer une MPL auto supportée. La couche microporeuse est ainsi réalisée, à part, sur un substrat inerte, duquel elle peut être séparée après traitement thermique. La réalisation d'une MPL auto supportée, disjointe de la GDL, autorise avantageusement de faire varier, au cours des essais, uniquement la nature de la GDL. Cependant, cette méthode n'est pas adaptée pour une approche industrielle car les couches MPL autosupportées présentent une très faible tenue mécanique, ce qui rend leur manipulation très délicate.

Dans le cadre de l'une ou l'autre de ces techniques, la présence d'espaces interfaciaux entre la couche active et la MPL est inévitable, notamment du fait des rugosités des surfaces de la couche active et de la MPL. Or, ces espaces sont préjudiciables aux performances de la cellule, notamment du fait que l'eau tend à s'y accumuler, en particulier pour des densités de courant de fonctionnement élevées.

Pour pallier ce désavantage, Daniel *et al.* [1] proposent une méthode de préparation de la MPL directement sur la couche active, par pulvérisation (spray), d'une dispersion (appelée plus couramment « encre »), formée à partir du mélange d'une solution de PTFE AF 1600 (poly[4,5-difluoro-2,2-bis(trifluorométhyl)-1,3-dioxole-co-tétrafluoroéthylène]) dans un solvant fluoré, de type FC-72 ou Fluorinert^{®} FC-40, d'une solution de noir de carbone, et dilution avec de l'isopropanol.

Cette technique présente toutefois plusieurs inconvénients, en particulier pour permettre sa mise en oeuvre à l'échelle industrielle. D'une part, elle requiert, pour la solubilisation du polymère, la mise en oeuvre d'un solvant fluoré, non souhaitable en raison de sa toxicité. D'autre part, une telle méthode ne permet pas de procéder au dépôt de l'encre par une technique autre que la pulvérisation. De fait, l'encre est à base d'isopropanol, un solvant réactif avec les matériaux des couches actives. Un dépôt de l'encre par pulvérisation permet une évaporation rapide du solvant et un temps de contact de la surface de la couche active avec le solvant réduit. En revanche, avec cette méthode, un dépôt de l'encre par enduction n'est pas envisageable au risque de détériorer la couche active.

Enfin, cette méthode requiert d'opérer, ultérieurement au dépôt de la couche, une étape de frittage, traitement thermique nécessitant une température élevée, afin de rendre la couche hydrophobe.

Ainsi, il demeure un besoin de pouvoir disposer d'un procédé de préparation, simplifié, d'une couche microporeuse (MPL) directement en surface de la couche active dans le cadre de la préparation d'un assemblage membrane-électrodes destiné à un convertisseur électrochimique, par exemple à une PEMFC, permettant de s'affranchir des contraintes précitées.

En particulier, il demeure un besoin de disposer d'un procédé de préparation d'une MPL directement en surface de la couche active, sans risque d'endommager cette dernière, pouvant faire intervenir le dépôt de l'encre par pulvérisation ou enduction, tout en permettant d'accéder à une MPL présentant les propriétés physico-chimiques requises, en particulier de bonnes propriétés d'hydrophobicité et une bonne tenue mécanique.

### Résumé de l'invention

L'invention vise précisément à répondre à ces attentes.

Plus particulièrement, l'invention concerne, selon un premier de ses aspects, un procédé de formation d'une couche microporeuse (MPL), électroconductrice et hydrophobe, en surface d'une couche active destinée à un convertisseur électrochimique, ledit procédé comprenant au moins les étapes suivantes :
(a) disposer d'une dispersion non aqueuse, appelée « encre », comprenant au moins un matériau particulaire carboné et au moins un solvant organique ;
(b) former un dépôt de ladite encre en surface de ladite couche active ; et
(c) procéder à l'évaporation du ou desdits solvants pour former ladite couche microporeuse MPL, l'étape (c) étant opérée simultanément et/ou ultérieurement à l'étape (b) ;
dans lequel ladite encre comprend au moins un copolymère poly(fluorure de vinylidène-co-hexafluoropropène), noté PVDF-HFP, en solution dans ledit solvant organique.

A la connaissance des inventeurs, il n'a encore jamais été proposé de former une couche microporeuse mettant en oeuvre un copolymère PVDF- HFP.

L'invention concerne encore, selon un autre de ses aspects, une dispersion non aqueuse ou encre, pour la préparation d'une couche microporeuse destinée à un convertisseur électrochimique, ladite encre comprenant au moins :
- au moins un matériau particulaire carboné en dispersion dans au moins un solvant organique ; et
- au moins un copolymère poly(fluorure de vinylidène-co-hexafluoropropène), noté PVDF-HFP, solubilisé dans ledit solvant organique.

Elle concerne encore l'utilisation d'une encre telle que définie précédemment pour former une couche microporeuse directement en surface d'une couche active dans le cadre de la préparation d'un assemblage membrane-électrodes destiné à un convertisseur électrochimique, par exemple à une PEMFC.

Par « dispersion non aqueuse », on entend une dispersion de particules solides dans un ou plusieurs solvants organiques, et ne contenant pas d'eau ou à défaut contenant une très faible quantité d'eau, en particulier inférieure à 1 % massique, notamment inférieure à 0,1 % massique.

De manière avantageuse, la mise en oeuvre d'un copolymère PVDF-HFP selon l'invention autorise la mise en oeuvre d'un large panel de solvants aptes à solubiliser ledit polymère. Avantageusement, le procédé de préparation d'une MPL selon l'invention permet de s'affranchir de la mise en oeuvre de solvant fluoré.

De manière avantageuse, l'encre pour la formation de la MPL met en oeuvre un ou plusieurs solvants organiques inertes vis-à-vis de la couche active à la surface de laquelle la couche MPL est formée.

Par solvant « inerte », on entend dans le cadre de la présente invention un solvant non réactif vis-à-vis du matériau de la couche active, et en conséquence n'étant pas susceptible d'endommager ou de dégrader ladite couche active avec laquelle il est mis en contact.

La mise en oeuvre selon l'invention d'un solvant organique inerte vis-à-vis de la couche active autorise de manière avantageuse le dépôt de l'encre pour la préparation de la couche MPL, directement en surface de la couche active, et par toute technique de dépôt, en particulier par pulvérisation, mais également par enduction, sans risque de détérioration de la couche active.

Ainsi, à la différence du procédé décrit Daniel *et al.* [1] qui, eu égard au solvant de l'encre utilisée, l'isopropanol, réactif vis-à-vis de la couche active, peut uniquement mettre en oeuvre l'application de l'encre par pulvérisation (spray) de sorte à permettre une évaporation très rapide du solvant et réduire au minimum le temps de contact avec la couche active, l'encre selon l'invention est adaptée à une application par toute technique de dépôt, en particulier par pulvérisation ou par enduction.

De préférence, l'encre pour la formation de la MPL comprend un unique solvant organique, permettant à la fois la dispersion du ou des matériaux particulaires carbonés et la solubilisation du PVDF-HFP.

Dans un mode de réalisation préféré, l'encre comprend, à titre de solvant organique, en particulier à titre d'unique solvant organique, l'acétate d'éthyle.

Par ailleurs, de manière avantageuse, la préparation d'une couche microporeuse selon l'invention ne requiert pas d'étape de frittage. Comme indiqué précédemment, dans les méthodes habituellement proposées pour former la couche MPL, l'étape de frittage est nécessaire afin de modifier la structure cristalline du polymère de la couche MPL de sorte à atteindre l'hydrophobicité souhaitée pour la MPL. En revanche, la préparation d'une couche MPL à base d'un copolymère PVDF-HFP selon l'invention permet d'accéder à une couche présentant une bonne hydrophobicité sans avoir besoin de recourir à une étape de frittage. Ainsi, comme détaillé dans la suite du texte, la préparation d'une encre, et la formation d'une MPL selon le procédé de l'invention, sont particulièrement aisées.

Au sens de l'invention, une couche est dite « hydrophobe » si la surface externe de son matériau constitutif est telle qu'une goutte d'eau déposée ne s'y étale pas. En particulier, l'interface liquide/gaz de la goutte d'eau forme un angle de contact avec la surface supérieure à 90°. Ce caractère hydrophobe est bien entendu également reproduit dans toute l'épaisseur de la couche, en particulier dans la porosité du matériau. Il peut notamment être contrôlé par analyse XPS de la surface d'une coupe transversale de cette couche.

Avantageusement, la couche microporeuse formée selon l'invention associe de bonnes propriétés d'hydrophobicité et de bonnes propriétés mécaniques. Le procédé de l'invention permet notamment d'accéder à des couches microporeuses homogènes, souples et résistantes aux fissures.

L'invention concerne encore, selon un autre de ses aspects, une structure multicouche, utile pour la préparation d'un assemblage membrane/électrodes destiné à un convertisseur électrochimique, par exemple à une pile PEMFC, comprenant au moins une couche active supportée par une membrane d'électrolyte solide ; et plus particulièrement appartenant à une membrane à revêtement catalytique dite CCM (« Catalyst Coated Membrane ») ;
ladite couche active étant en contact, au niveau de sa face opposée à ladite membrane solide, avec une couche microporeuse (MPL), électroconductrice et hydrophobe, obtenue par un procédé de l'invention, tel que défini précédemment, en particulier obtenue par dépôt à la surface de ladite couche active d'une encre selon l'invention.

Comme indiqué précédemment, la couche microporeuse est formée selon l'invention dans le cadre de la fabrication d'un assemblage membrane/électrodes, dit AME, destiné à un convertisseur électrochimique, par exemple à une PEMFC.

Ainsi, selon un autre de ses aspects, l'invention concerne l'utilisation d'une structure multicouche telle que définie précédemment pour la préparation d'un assemblage membrane/électrodes destiné à un convertisseur électrochimique, par exemple à une PEMFC.

L'invention concerne encore un assemblage membrane/électrodes, dit AME, destiné à un convertisseur électrochimique, par exemple à une PEMFC, comprenant une structure multicouche selon l'invention, ledit assemblage comprenant plus particulièrement l'empilement suivant : GDL/MPL/CCM/MPL/GDL,
GDL désignant des couches de diffusion, typiquement de type substrat carboné, par exemple en papier carbone, imprégné par du PTFE ;
MPL désignant des couches microporeuses ;
CCM (« catalyst coated membrane ») désignant une membrane d'électrolyte revêtue de part et d'autre d'une couche catalytique cathodique (CCL) et d'une couche catalytique anodique (ACL pour « anode catalyst layer ») ;
au moins l'une des couches MPL étant formée par un procédé selon l'invention, tel que défini précédemment, mettant en oeuvre une encre telle que définie précédemment.

De manière avantageuse, la formation de la MPL directement en surface d'une couche active, en particulier au niveau de la structure CCM, permet de faire varier la nature de la GDL, afin d'optimiser l'assemblage membrane/électrodes.

L'invention concerne encore, selon un autre de ses aspects, l'utilisation d'une structure multicouche selon l'invention telle que définie précédemment ou d'un assemblage membrane/électrodes selon l'invention tel que défini précédemment, dans une cellule d'un convertisseur électrochimique, en particulier dans une cellule de pile à combustible et plus particulièrement dans une cellule de pile à combustible à membrane d'échange de protons (PEMFC).

D'autres caractéristiques, variantes et avantages de la formation d'une MPL selon l'invention, de sa mise en oeuvre au niveau d'un assemblage membrane/électrodes pour un convertisseur électrochimique, ressortiront mieux à la lecture de la description, des exemples et des figures qui vont suivre, donnés à titre illustratif et non limitatif de l'invention.

Dans la suite du texte, les expressions « compris entre ... et ... », « allant de ... à ... » et « variant de ... à ... » sont équivalentes et entendent signifier que les bornes sont incluses, sauf mention contraire.

### Brève description des dessins

[Fig 1] est un schéma de l'art antérieur (extrait de la publication [2]) présentant différentes architectures d'assemblage membrane-électrodes (AME) : (a) AME sans couche MPL, (b) AME avec une couche MPL commerciale, (c) AME avec une couche MPL modifiée sur CCM et (d) AME avec double couche MPL ;
[Fig 2] présente une photographie (figure 2(a)) et une représentation schématique (figure 2(b)) du dispositif mis en oeuvre pour l'enduction de l'encre pour la préparation de la couche MPL selon l'exemple 1 ;
[Fig 3] présente des clichés obtenus par microscopie électronique à balayage (MEB) de l'assemblage complet AME formé en exemple 1 (GDL/MPL/CCM/MPL/GDL, la couche MPL supérieure étant une couche formée selon l'invention), pour différents grossissements ;
[Fig 4] présente schématiquement la réalisation des AME de référence, formés de manière conventionnelle par assemblage de structures MPL/GDL au niveau de chacune des couches actives d'une structure CCM (figure 4(a)) ; et la réalisation des AME selon l'invention, formés par assemblage du côté de la cathode d'une GDL au niveau de la structure CCM/MPL formée selon l'invention intégrant une MPL formée selon l'invention directement en surface de la couche active cathodique de la CCM (figure 4(b)).
[Fig 5] représente les courbes de polarisation (tension (V) en fonction de la densité de courant (A/cm²)) des cellules obtenues avec chacun des AME en exemple 2.

### Description détaillée

### ENCRE POUR LA PREPARATION DE LA MPL

Comme indiqué précédemment, l'invention repose sur la formation de la couche microporeuse, dite dans la suite du texte « MPL », directement en surface de la couche active, à partir d'une dispersion non aqueuse, appelée « encre », comprenant au moins un matériau particulaire carboné et au moins un copolymère poly(fluorure de vinylidène-co-hexafluoropropène), noté dans la suite du texte PVDF-HFP, solubilisé dans au moins un solvant organique.

### Co-polymère PVDF-HFP

Un copolymère PVDF-HFP mis en oeuvre selon l'invention présente plus particulièrement la structure (I) suivante : 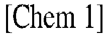 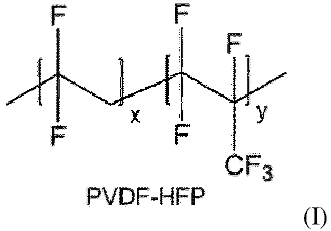 x correspondant au nombre moyen d'unités monomériques issues du fluorure de vinylidène et y le nombre moyen d'unités monomériques issues de l'hexafluoropropène.

L'enchaînement des unités monomériques issues du fluorure de vinylidène et de l'hexafluoropropène dans le PVDF-HFP peut être aléatoire, de type monobloc ou multibloc, de préférence monobloc ou multibloc. Les unités HFP sont de préférence greffées en bouts de chaine du polymère PVDF.

Selon un mode de réalisation particulier, un PVDF-HFP convenant à l'invention présente avantageusement une masse moléculaire moyenne en nombre Mₙ comprise entre 300 g.mol⁻¹ et 600 g.mol⁻¹. La masse molaire moyenne en nombre peut être mesurée par chromatographie d'exclusion stérique (ou SEC). Elle peut encore être obtenue à partir de l'analyse RMN ¹H du (co)polymère obtenu.

Les copolymères PVDF-HFP peuvent être synthétisés par des méthodes connues de l'homme du métier, ou encore être disponibles commercialement.

A titre d'exemple, un copolymère PVDF-HFP convenant à l'invention peut être commercialisé sous la référence PVDF-HFP Solef^{®} 21216 par SOLVAY.

Le ou lesdits copolymère(s) PVDF-HFP peuvent être mis en oeuvre au niveau l'encre utilisée pour la formation de la couche MPL à raison de 0,3 à 5 % massique, en particulier de 0,4 % à 2 % massique, par rapport à la masse totale de l'encre.

### Solvant organique

En ce qui concerne le solvant organique, il est choisi de sorte à solubiliser le copolymère PVDF-HFP et à disperser le ou lesdits matériaux particulaires carbonés.

En particulier, le copolymère PVDF-HFP peut être solubilisé dans ledit solvant organique à raison d'au moins 2 % massique, en particulier en une teneur de 2 % à 5 % massique.

De manière avantageuse, comme évoqué précédemment, la mise en oeuvre d'un copolymère PVDF-HFP selon l'invention, en particulier comparativement au PTFE tel qu'utilisé dans le procédé décrit par Daniel *et al.* [1], autorise la mise en oeuvre d'un large panel de solvants aptes à solubiliser le polymère.

Également, de manière avantageuse, le ou lesdits solvants organiques mis en oeuvre selon l'invention sont distincts de solvants fluorés, ces derniers étant peu souhaitables pour des raisons de toxicité.

Le solvant organique de l'encre peuvent être notamment choisis parmi l'acétone, l'acétonitrile, l'acétate d'éthyle, le butanone (MEK), le tétrahydrofurane (THF), le diméthylacétamide (DMAC), le *N*,*N*-diméthylformamide (DMF), et leurs mélanges ; de préférence parmi l'acétone, l'acétonitrile, l'acétate d'éthyle, le butanone, le tétrahydrofurane (THF) et leurs mélanges.

Avantageusement, le procédé de l'invention met en oeuvre un solvant organique inerte vis-à-vis de la couche active à la surface de laquelle la MPL est destinée à être formée.

Comme évoqué précédemment, la mise en oeuvre selon l'invention d'un solvant organique inerte vis-à-vis de la couche active autorise avantageusement le dépôt de l'encre pour la préparation de la couche MPL, directement en surface de la couche active, et par toute technique de dépôt.

Ainsi, à la différence du procédé décrit Daniel *et al.* [1] qui, eu égard au solvant de l'encre utilisée, l'isopropanol, réactif vis-à-vis de la couche active, peut uniquement mettre en oeuvre l'application de l'encre par pulvérisation (spray) de sorte à permettre une évaporation très rapide du solvant et réduire au minimum le temps de contact avec la couche active, l'encre selon l'invention est adaptée à une application par toute technique de dépôt, en particulier par pulvérisation mais également par enduction.

Selon un mode de réalisation particulier de l'invention, le solvant organique utilisé, en plus de dissoudre le polymère, est inerte vis-à-vis de la couche active à la surface de laquelle l'encre est destinée à être déposée.

De préférence, l'encre met en oeuvre, à titre de solvant organique, en particulier à titre d'unique solvant organique, l'acétate d'éthyle.

Le ou lesdits solvants organiques, en particulier l'acétate d'éthyle, peu(ven)t représenter de 70 à 90 % massique, en particulier de 80 à 85 % massique, de la masse totale de l'encre.

### Matériau particulaire carboné

L'encre comprend au moins un matériau particulaire carboné en dispersion dans le ou lesdits solvants organiques.

Le matériau particulaire carboné est dédié à conférer à la couche MPL ses propriétés électroconductrices. Il permet également d'augmenter la conductivité thermique permettant d'évacuer la chaleur produite dans la cellule de pile à combustible.

D'une manière générale, le matériau particulaire carboné présente une taille particulaire moyenne inférieure au millimètre, en particulier inférieure à 5 µm et plus particulièrement inférieure à 100 nm, notamment comprise entre 20 nm et 50 nm.

La taille particulaire moyenne peut être évaluée par microscopie électronique à balayage.

Il est entendu que la nature du ou des matériaux carbonés mis en oeuvre au niveau de l'encre, en particulier la taille particulaire moyenne du ou des matériaux carbonés mis en oeuvre, est ajustée au regard du moyen retenu pour le dépôt de l'encre en surface de la couche active.

En particulier, lorsque le dépôt de l'encre est opéré par pulvérisation (spray), le ou lesdits matériaux particulaires carbonés doivent présenter une taille particulaire adaptée au dispositif de pulvérisation, en particulier adaptée au diamètre de la buse du dispositif de pulvérisation, pour éviter une obstruction de la buse.

En particulier, dans le cas d'une encre destinée à être déposée par spray, le ou lesdits matériaux particulaires carbonés présentent avantageusement une taille particulaire moyenne inférieure ou égale à 5 µm et plus particulièrement comprise entre 20 et 100 nm.

Le ou lesdits matériaux particulaires carbonés peuvent être choisis parmi le noir de carbone, le charbon actif, le graphite, les nanotubes de carbone, les nanofibres de carbone, les fibres de carbone broyées, et leurs mélanges, de préférence parmi le noir de carbone, les nanofibres de carbone, notamment élaborées en phase vapeur, et leurs mélanges.

En particulier, l'encre peut comprendre un unique type de matériau carboné particulaire, ou un mélange d'au moins deux matériaux carbonés particulaires.

Le matériau carboné particulaire peut comprendre au moins du noir de carbone, par exemple vendu sous la marque Vulcan XC72R^{®} d'extrait sec 99% commercialisé par la société TANAKA.

Le matériau carboné particulaire peut comprendre des nanofibres de carbone.

Avantageusement, ces fibres de carbone sont élaborées en phase vapeur. En particulier, ces fibres peuvent comporter du carbone graphité. Elles sont généralement caractérisées par une longueur de 1 à 50 µm et de préférence de 5 à 25 µm. Les fibres de carbone réalisées en phase vapeur permettent avantageusement d'augmenter les conductivités thermiques et électriques tout en limitant le nombre de craquelures se formant durant le séchage de la couche MPL.

Par exemple, il peut s'agir de nanofibres de carbone, commercialisées sous le nom VGCF^{®} d'extrait sec 99% par la société Showa Denko.

Selon un mode de réalisation particulier, l'encre comprend un mélange de noir de carbone et de nanofibres de carbone, notamment élaborées en phase vapeur.

Le ou les matériau(x) particulaire(s) carboné(s) peu(ven)t être mis en oeuvre à raison de 2 à 7 % massique, en particulier de 2 à 5 % massique, par rapport à la masse totale de l'encre.

### Préparation de l'encre pour la couche MPL

Les teneurs des différents composants de l'encre, en particulier du ou desdits copolymère(s) PVDF-HFP et du ou desdits matériau(x) particulaire(s) carboné(s), dans le ou lesdits solvants organiques, sont ajustées afin d'obtenir une couche MPL combinant une porosité adaptée à la diffusion des gaz et un transport des produits optimal, une résistivité électrique faible, une stabilité mécanique satisfaisante et une conductivité thermique satisfaisante.

En particulier, l'encre pour la préparation de la couche MPL peut comprendre de 2 % à 7 %, en particulier de 2 à 5 % massique de matériau(x) particulaire(s) carboné(s), de 0,3 % à 5 %, en particulier de 0,4 à 2 % massique de PVDF-HFP et de 70 % à 90 %, en particulier de 80 à 85 % massique de solvant(s) organique(s), en particulier tels que définis précédemment, le solvant étant de préférence l'acétate d'éthyle.

La teneur en copolymère PVDF-HFP dans l'encre peut varier entre 5 % et 10 % massique par rapport à la masse totale de l'encre, exprimée en extrait sec.

Dans un mode de réalisation particulier, le ou lesdits matériaux particulaires carbonés et copolymère PVDF-HFP peuvent être mis en oeuvre dans un rapport massique matériau(x) carboné(s)/PVDF-HFP allant de 2 à 6.

L'encre selon l'invention peut être obtenue par mélange, dans le ou lesdits solvants organiques, en particulier dans l'acétate d'éthyle, du PVDF-HFP et du ou desdits matériaux particulaires carbonés.

De préférence, le PVDF-HFP est préalablement solubilisé dans le solvant organique, en particulier dans l'acétate d'éthyle, avant d'être combiné aux autres composants.

De préférence, l'encre est obtenue par mélange, en particulier dans cet ordre, du ou desdits matériaux carbonés particulaires, du PVDF-HFP, de préférence préalablement solubilisé dans un solvant organique, notamment dans l'acétate d'éthyle, et du solvant organique.

De préférence, le mélange est dispersé.

Ainsi, la préparation de l'encre est aisée et nécessite avantageusement peu d'étapes ; elle peut ainsi être préalablement obtenue par (i) solubilisation du PVDF-HFP dans le solvant organique, de préférence dans l'acétate d'éthyle, (ii) mélange avec le ou lesdits matériaux particulaires carbonés dans le solvant organique, puis (iii) dispersion du mélange.

Les composants peuvent être par exemple dispersés avec un disperseur mécanique, par exemple de type rotor-stator. De préférence, la dispersion est préparée à l'aide d'un disperseur sous vide. En particulier, avant l'étape de dispersion, les différents matériaux particulaires carbonés sont tout d'abord mélangés, puis le PVDF-HFP est ajouté, et enfin le solvant organique, notamment l'acétate d'éthyle.

La dispersion obtenue peut de préférence être soumise ensuite à une agitation, par exemple à l'aide d'un agitateur de type tubes rouleaux. A titre d'agitateur, on peut citer les agitateurs de type tubes rouleaux. Des billes de zirconium, par exemple d'un diamètre compris entre 2 mm et 3 mm, par exemple de 3 mm de diamètre, peuvent être ajoutées à la dispersion. L'encre préparée selon l'invention présente avantageusement une bonne dispersion des matériaux particulaires carbonés dans le solvant organique, en particulier l'acétate d'éthyle, dans lequel est dissous le copolymère PVDF-HFP.

### FORMATION DE LA COUCHE MPL

Comme indiqué précédemment, la préparation de la couche MPL selon l'invention met en oeuvre la formation d'un dépôt de ladite encre, en particulier telle que définie précédemment, directement en surface de la couche active, et l'évaporation du ou des solvants organiques, pour former la couche MPL.

La couche active à la surface de laquelle est formée la couche MPL selon l'invention peut être une couche catalytique cathodique, dite « CCL » pour « Cathode catalyst layer » en terminologie anglo-saxonne, ou une couche catalytique anode, dite « ACL » pour « Anode catalyst layer » en terminologie anglo-saxonne.

La couche active est plus particulièrement supportée par une membrane solide, en particulier une membrane d'électrolyte solide, le dépôt de l'encre en étape (b) étant opérée sur la face de ladite couche active opposée à la membrane solide.

La couche active à la surface de laquelle est déposée l'encre selon l'invention peut ainsi plus particulièrement appartenir à une membrane à revêtement catalytique, dite CCM (« Catalyst Coated Membrane » en terminologie anglo-saxonne), désignant l'assemblage d'une membrane revêtue sur chacune de ses faces opposées d'une couche catalytique (couche active).

La membrane CCM mise en oeuvre peut être choisie parmi celles communément mises en oeuvre pour la préparation des convertisseurs électrochimiques, notamment des piles à combustible et électrolyseurs à membrane polymère.

Comme évoqué précédemment, le dépôt de l'encre peut être opéré avantageusement par enduction ou par pulvérisation (spray).

De manière avantageuse, le dépôt est opéré de sorte à contrôler l'épaisseur du dépôt en surface de la couche active.

L'enduction peut être par exemple réalisée au rouleau, à la racle ou au couteau.

De manière avantageuse, le dépôt de l'encre est réalisé à une température comprise entre 60 et 80 °C, en particulier entre 70 et 80 °C.

L'évaporation du solvant organique, en particulier de l'acétate d'éthyle, peut être opérée simultanément au dépôt de l'encre, notamment lors d'un dépôt par pulvarisation, et/ou après dépôt de l'encre, notamment lors d'un dépôt par enduction. Le séchage après dépôt peut être opéré par exemple pendant quelques minutes, par exemple de 1 à 15 minutes, notamment de 1 à 10 minutes, par exemple d'environ 5 minutes.

De préférence, lorsque le dépôt de l'encre est opéré par enduction, la structure comportant la couche active superposée à une membrane, en particulier la membrane CCM, est fixée, par exemple à l'aide d'une bande adhésive, avantageusement sur un support rigide, par exemple sur un substrat en polytétrafluoroéthylène (PTFE), ceci afin d'éviter un phénomène de rétraction de la membrane en présence d'une grande quantité de solvant.

L'évaporation du ou desdits solvants organiques, en particulier de l'acétate d'éthyle, peut être opérée par chauffage à une température inférieure ou égale à 80 °C, en particulier comprise entre 60 et 80 °C, en particulier entre 70 et 80 °C.

Avantageusement, comme évoqué précédemment, la formation de la couche MPL selon l'invention ne requiert aucune étape de frittage. Par frittage, on entend désigner un traitement thermique à une température au-delà de la température de fusion du polymère présent dans la couche MPL. Cette étape de frittage est généralement nécessaire, par exemple dans le cas de la mise en oeuvre du PTFE, afin de modifier la structure cristalline du polymère et atteindre l'hydrophobicité souhaitée de la couche MPL.

Dans le cadre de la présente invention, le PVDF-HFP permet de procurer à la couche MPL formée selon l'invention l'hydrophobicité nécessaire sans recourir à une étape de frittage.

La couche MPL formée selon l'invention en surface d'une couche active présente avantageusement une épaisseur comprise entre 30 µm et 70 µm, en particulier entre 40 µm et 60 µm, encore plus particulièrement entre 45 µm et 55 µm.

Comme exposé dans les exemples qui suivent, le procédé de l'invention permet avantageusement d'accéder à des couches MPL d'épaisseur plus faible que les couches MPL commerciales. Une diminution de l'épaisseur est susceptible de permettre une diminution de la résistance au transport de l'oxygène, et ainsi d'accroître les performances du convertisseur électrochimique.

### CONVERTISSEUR ELECTROCHIMIQUE

Comme évoqué précédemment, le procédé de l'invention permet de préparer des couches MPL dans le cadre de la fabrication d'un assemblage membrane/électrodes, dit AME, pour un convertisseur électrochimique, en particulier pour des piles à combustible à membrane échangeuse de protons (PEMFC) ou des électrolyseurs à membrane polymère.

L'invention vise ainsi, selon un autre de ses aspects, l'utilisation d'une structure multicouche selon l'invention comprenant une couche MPL formée selon l'invention, pour la préparation d'un assemblage membrane/électrodes destiné à un convertisseur électrochimique, par exemple à une PEMFC.

Un assemblage membrane/électrodes (AME) selon l'invention comprenant une couche MPL formée selon l'invention comprend plus particulièrement l'empilement suivant :
GDL/MPL/CCM/MPL/GDL,
GDL désignant des couches de diffusion gazeuse, par exemple de type substrat carboné (par exemple, non-tissé en carbone, tissu de carbone, feutre de carbone, papier de carbone, etc.) imprégné par du PTFE ;
MPL désignant des couches microporeuses ;
CCM désignant une membrane revêtue de part et d'autre d'une couche catalytique cathodique (CCL) et d'une couche catalytique anodique (ACL pour « anode catalyst layer ») ;
au moins l'une des couches MPL étant une couche formée selon l'invention, en particulier les deux couches MPL étant des couches formées selon l'invention.

La préparation d'un assemblage membrane/électrodes (AME) selon l'invention inclut en particulier la mise en oeuvre, au niveau de la face de la couche MPL formée selon l'invention, opposée à la face au contact de la couche active, d'une couche GDL.

La couche GDL peut être simplement accolée à la couche MPL, sans nécessiter de pressage à chaud.

L'invention va maintenant être décrite au moyen des exemples suivants, donnés bien entendu à titre illustratif et non limitatif de l'invention.

### EXEMPLE 1

### Formation de la couche microporeuse MPL selon l'invention directement sur une couche active et intégration dans un assemblage membrane/électrodes (AME) complet

### Préparation de l'encre pour la fabrication de la MPL

Les matières premières suivantes ont été utilisés :
- fibres de carbone VGCF^{®} d'extrait sec 99% commercialisées par la société Showa Denko ;
- noir de carbone Vulcan XC72^{®} d'extrait sec 99% commercialisé par la société TANAKA ;
- polymère : poly(fluorure de vinylidène/hexafluoropropène) ou PVDF-HFP (commercialisé sous la référence PVDF-HFP Solef^{®} 21216 par SOLVAY), solubilisé à 2 % en poids dans l'acétate d'éthyle ;
- solvant : acétate d'éthyle.

L'encre pour la formation de la MPL a été préparée à partir de ces matières premières, par mélange dans l'ordre suivant et dans les quantités indiquées dans le tableau 1 ci-dessous.

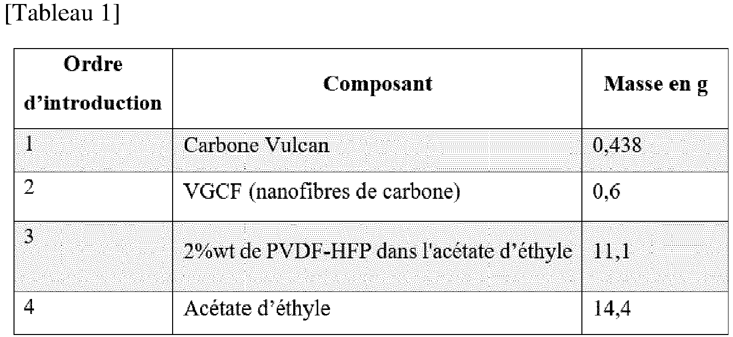

La solution a ensuite été dispersée dans un pot au DISPERMAT^{®} pendant 30 minutes à 1000 tours par minute. Puis, le pot a ensuite été placé sur un agitateur de type tubes rouleaux après avoir ajouté dans le mélange 1/3 du volume d'encre de billes de zirconium de 3mm de diamètre. Les billes de zirconium sont ajoutées directement dans le mélange. Ainsi, en plaçant le pot sur les tubes rouleaux, elles permettent d'ajouter un cisaillement comme pour un classique broyeur à billes (« ball milling ») mais beaucoup plus doux.

### Formation de la MPL par enduction de l'encre

L'enduction a été réalisée le jour même sur une table d'enduction équipée d'un support poreux aspirant et chauffant.

L'encre est appliquée par enduction au niveau du côté cathodique d'une CCM (« Catalyst coated membrane ») comprenant des couches catalytiques de part et d'autre d'une membrane (électrolyte solide), commercialisée sous la référence Gore^{®} A510.1/M735.18/C580.4, c'est-à-dire au niveau de la couche active cathodique.

Pour éviter une rétraction des membranes lors de leur contact avec une grande quantité de solvant, la CCM est fixée sur un support rigide en PTFE de 250 µm pendant l'enduction de l'encre sur la couche catalytique.

L'enduction a ensuite été réalisée avec les paramètres suivants :
- Hauteur du couteau : 250 µm
- Vitesse : 1 cm/s
- Température de la table : 70°C.

Un film fin de polynaphtalate d'éthylène (PEN) de 50 µm d'épaisseur est ajouté par-dessus la CCM, avant enduction, afin de délimiter la zone de dépôt, comme représenté schématiquement en Figure 2.

Le dépôt est séché après enduction à 70°C pendant environ 5 minutes. La température correspond plus particulièrement à la température de consigne du plateau chauffant sur lequel est déposé la membrane CCM, la membrane CCM étant ainsi à une température légèrement inférieure.

### Intégration de la CCM/MPL selon l'invention au niveau d'un AME complet

Un assemblage membrane/électrodes (AME) complet est ensuite formé en appliquant une GDL formé d'un substrat fibreux carboné imprégné à 5 % massique de PTFE, commercialisé sous la référence Sigracet^{®} GDL 25 BA au niveau de la MPL formée au niveau de la couche active cathodique ; et, du côté anodique, un ensemble GDL/MPL, disponible commercialement sous la référence Sigracet^{®} GDL 25 BC, formé d'un substrat fibreux carboné imprégné à 5 % massique de PTFE et recouvert d'une MPL standard (PTFE et noir de carbone).

Dans les deux cas la GDL, avec ou sans MPL est accolée à la CCM pendant le montage de l'AME dans la cellule sans pressage à chaud.

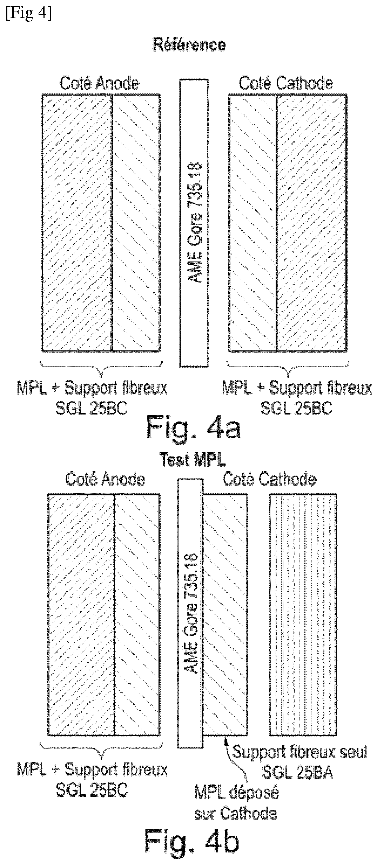

La figure 4(b) représente schématiquement la réalisation de l'AME selon l'invention intégrant l'assemblage CCM/MPL réalisé selon l'invention.

### Résultats

La couche microporeuse obtenue en surface de la couche active cathodique présente une bonne adhésion sur la couche active. La couche est souple et ne se fissure pas lors de la manipulation de la CCM.

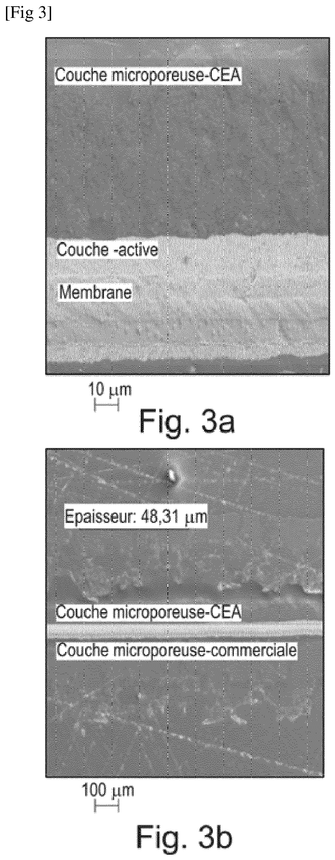

L'observation, en coupe, par microcopie électronique à balayage (MEB) de l'assemblage complet AME ainsi formé (Figure 3) indique que la couche microporeuse MPL formée selon l'invention a une épaisseur de l'ordre de 50 µm.

Le dépôt présente une épaisseur homogène, et la couche active est intacte et n'a donc subi aucune détérioration lors de la formation directe de la MPL selon l'invention.

Le procédé de l'invention permet ainsi l'obtention de couches MPL plus fines que les couches commerciales, généralement de l'ordre de 80 µm d'épaisseur.

L'obtention d'une couche plus fine n'est pas pénalisante. Au contraire, cette diminution d'épaisseur est susceptible de réduire avantageusement la résistance au transport de l'oxygène.

### EXEMPLE 2

### Evaluation en cellule différentielle

A titre de comparaison, un AME standard est également étudié, formé de l'assemblage de couches de diffusion commercialisées sous la référence Sigracet^{®} GDL 25 BC, formées chacune d'un substrat fibreux carboné imprégné à 5 % massique de PTFE et recouvert d'une MPL standard, de part et d'autre de la CCM commercialisée sous la référence Gore^{®} 735.18. Les deux AME testés sont représentés en Figure 4.

Chaque AME est reproduit deux fois ((B1) et (B2) désignant les AME de référence ; et (B3), (B4) les AME selon l'invention.

Les AME réalisés sont testés en cellule différentielle de type PEMFC de surface 1,8 cm².

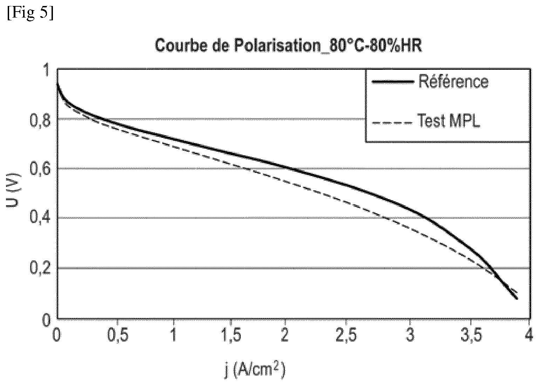

L'AME est tout d'abord conditionné pendant 6 heures en appliquant en tension de 0,7 V. La pile est chauffée à 80°C sous H₂ coté anode et air coté cathode à une pression relative de 1,5 bars de chaque côté. Les gaz sont à une humidité relative de 80% et une stoechiométrie de 20 à l'anode et 30 à la cathode. Les courbes de polarisation sont réalisées à l'issue du conditionnement dans les mêmes conditions que celui-ci, soit 80°C ; 1,5 bars ; 80% HR, H₂/air - stoechiométrie 20-30. Elles sont contrôlées en tension et le balayage s'effectue en partant de l'OCV jusqu'à 0,1V puis retour à l'OCV à une vitesse de balayage de 10 mV/s. La Figure 5 représente les courbes de polarisation (tension (V) en fonction de la densité de courant (A/cm²)), des cellules obtenues avec chacun des AME (B 1), (B2), (B3) et (B4). Les performances de la couche microporeuse (MPL) préparée selon l'invention sont très proches de la référence, confortant l'efficacité du procédé de préparation selon la présente invention.

### Référence

[1] Daniel et al, 2021, J. Electrochem. Soc. 168 104513 ;
[2] Daniel et al., New CCL|MPL Architecture Reducing Interfacial Gaps and Enhancing PEM Fuel Cell Performance de FUEL CELLS, volume 20, 2020, No. 2, 224-228.

## Revendications

1. Procédé de formation d'une couche microporeuse (MPL) électroconductrice et hydrophobe, en surface d'une couche active destinée à un convertisseur électrochimique, comprenant au moins les étapes suivantes :
(a) disposer d'une dispersion non aqueuse, appelée « encre », comprenant au moins un matériau particulaire carboné et un unique solvant organique ;
(b) former un dépôt de ladite encre en surface de ladite couche active ; et
(c) procéder à l'évaporation du ou desdits solvants pour former ladite couche microporeuse MPL, l'étape (c) étant opérée simultanément et/ou ultérieurement à l'étape (b) ;
dans lequel ladite encre comprend au moins un copolymère poly(fluorure de vinylidène-co-hexafluoropropène), noté PVDF-HFP, en solution dans ledit solvant organique, l'unique solvant organique étant de l'acétate d'éthyle.

2. Procédé selon la revendication précédente, dans lequel ledit copolymère PVDF-HFP présente une masse moléculaire moyenne en nombre Mₙ comprise entre 300 g.mol⁻¹ et 600 g.mol⁻¹.

3. Procédé selon l'une quelconque des revendications précédentes, dans lequel ledit solvant organique est choisi parmi l'acétone, l'acétonitrile, l'acétate d'éthyle, le butanone (MEK), le tétrahydrofurane (THF), le diméthylacétamide (DMAC), le *N,N-*diméthylformamide (DMF) et leurs mélanges, de préférence parmi l'acétone, l'acétonitrile, l'acétate d'éthyle, le butanone, le tétrahydrofurane (THF) et leurs mélanges.

4. Procédé selon l'une quelconque des revendications précédentes, dans lequel le ou lesdits matériaux particulaires carbonés présentent une taille particulaire moyenne inférieure au millimètre, en particulier inférieure à 5 µm et plus particulièrement inférieure à 100 nm, notamment comprise entre 20 nm et 50 nm.

5. Procédé selon l'une quelconque des revendications précédentes, dans lequel le ou lesdits matériaux particulaires carbonés sont choisis parmi le noir de carbone, le charbon actif, le graphite, les nanotubes de carbone, les nanofibres de carbone, les fibres de carbone broyées, et leurs mélanges, de préférence parmi le noir de carbone, les nanofibres de carbone, notamment élaborées en phase vapeur, et leurs mélanges.

6. Procédé selon l'une quelconque des revendications précédentes, dans lequel ladite encre comprend de 2 % à 7 % massique de matériau(x) particulaire(s) carboné(s), de 0,3 % à 5 % massique de copolymère PVDF-HFP et de 70 % à 90 % en poids de solvant(s) organique(s), le solvant étant de préférence l'acétate d'éthyle.

7. Procédé selon l'une quelconque des revendications précédentes, dans lequel ladite encre est préalablement obtenue par (i) solubilisation dudit copolymère PVDF-HFP dans ledit solvant organique, de préférence dans l'acétate d'éthyle, (ii) mélange avec le ou lesdits matériaux particulaires carbonés dans ledit solvant organique, puis (iii) dispersion dudit mélange.

8. Procédé selon l'une quelconque des revendications précédentes, dans lequel ladite couche active est supportée par une membrane d'électrolyte solide, en particulier ladite couche active appartient à une membrane à revêtement catalytique, dite CCM ; le dépôt de l'encre en étape (b) étant opéré sur la face de ladite couche active opposée à la membrane solide.

9. Procédé selon l'une quelconque des revendications précédentes, dans lequel le dépôt en étape (b) de l'encre est opéré par enduction ou par pulvérisation, en particulier à une température comprise entre 60 et 80°C, en particulier entre 70 et 80 °C.

10. Procédé selon l'une quelconque des revendications précédentes, dans lequel ladite couche MPL présente une épaisseur comprise entre 30 µm et 70 µm, en particulier entre 40 µm et 60 µm, encore plus particulièrement entre 45 µm et 55 µm.

11. Encre pour la préparation d'une couche microporeuse (MPL) destinée à un convertisseur électrochimique, ladite encre comprenant au moins :
- au moins un matériau particulaire carboné en dispersion dans un unique solvant organique ; et
- au moins un copolymère poly(fluorure de vinylidène-co-hexafluoropropène), noté PVDF-HFP, solubilisé dans ledit solvant organique
l'unique solvant organique étant de l'acétate d'éthyle.

12. Encre selon la revendication précédente, ladite encre étant telle que définie dans l'une quelconque des revendications 2 à 7.
